# EUROPÄISCHE PATENTSCHRIFT

(11) **EP 1 526 017 B1**
(45) Veröffentlichungstag und Bekanntmachung des Hinweises auf die Patenterteilung: **11.12.2019**
(21) Anmeldenummer: 04024488.1
(22) Anmeldetag: 14.10.2004
(51) Int. Cl.: B60H 1/00

(54) **FAHRZEUG MIT AUFNAHMEEINRICHTUNG**
VEHICLE WITH A RECEIVING UNIT
VÉHICULE COMPORTANT UN DISPOSITIF DE RÉCEPTION

(30) Priorität: 21.10.2003 DE 10349427
(43) Veröffentlichungstag der Anmeldung: 27.04.2005
(73) Patentinhaber: MAHLE Behr GmbH & Co. KG, 70469 Stuttgart (DE)
(72) Erfinder: Ghussein, Luay, Dipl.-Ing., 70374 Stuttgart (DE); Heinle, Dieter, Dipl.-Ing., 73655 Plüdershausen (DE); Klingler, Dietrich, Dipl.-Ing., 73540 Heubach (DE); Schmadl, Dieter, Dipl.-Ing., 71672 Marbach (DE); Schwahn, Werner, 71701 Schwieberdingen (DE); Trost, Werner, 72622 Nürtingen (DE); Voigt, Klaus, Dipl.-Ing., 74321 Bietigheim-Bissingen (DE)
(74) Vertreter: Grauel, Andreas

(56) Entgegenhaltungen:
- EP-A- 0 904 964
- WO-A-01/38115
- FR-A- 2 700 502
- GB-A- 1 508 908
- US-B1- 6 409 590

## Beschreibung

Die vorliegende Erfindung betrifft ein Fahrzeug, insbesondere ein Kraftfahrzeug mit wenigstens einer Aufnahmeeinrichtung für eine Vorrichtung zum Austauschen von Wärme.

Im Stand der Technik sind Fahrzeuge, insbesondere Kraftfahrzeuge, wie beispielsweise Automobile, bekannt, welche zur Klimatisierung bzw. zur Temperierung des Fahrgastinnenraums Heizungen und/oder Kühleinrichtungen, insbesondere Klimaanlagen aufweisen.

Solche Klimaanlagen sind im Stand der Technik bekannt, wobei die Anordnung solcher Anlagen dahingehend Probleme bereitet, dass der hierfür zur Verfügung stehende Raum begrenzt ist. Dies ist unter anderem dadurch begründet, dass bei immer kompakteren Bauformen von Fahrzeugen der mögliche Raum im Motorenbereich des Fahrzeuges reduziert werden soll, und gleichzeitig der im Fahrgastraum vorhandene Platz nicht durch zusätzliche Anlagen, wie beispielsweise einer Heizungs- und/oder Kühleinrichtung reduziert werden soll.

Die EP 0 904 964 A2 offenbart eine Klimaanlage eines Kraftfahrzeugs mit einem Lufttemperatursteuer- und -verteilmodul. Weitere Klimaanlagen für Kraftfahrzeuge sind auch durch die FR 2 700 502 A1, die US 6 409 590 B1 und die WO 01/38115 A1 bekannt geworden.

So werden beispielsweise im Stand der Technik die vorgenannten Einrichtungen im Armaturenbrett bzw. hinter dessen Verkleidung angeordnet, wobei insbesondere die hieraus resultierende aufwendige Kanalführung für die Verteilung und Ansaugung als nachteilig bekannt ist.

Es ist somit Aufgabe der vorliegenden Erfindung, ein Fahrzeug zur Verfügung zu stellen, in welchem die zuvor beschriebenen Probleme für die Anordnung einer entsprechenden Vorrichtung reduziert werden und gleichzeitig der in einem Fahrzeug zur Verfügung stehende Bauraum besser genutzt wird.

Die Aufgabe wird durch ein Fahrzeug gemäß Anspruch 1 gelöst, wobei bevorzugte Ausführungsformen des erfindungsgemäßen Fahrzeuges Gegenstand der Unteransprüche sind.

Das erfindungsgemäße Fahrzeug ist insbesondere ein Kraftfahrzeug, welches wenigstens eine Aufnahmeeinrichtung für wenigstens eine Vorrichtung zum Austausch von Wärme aufweist. Die Vorrichtung zum Austausch von Wärme weist wenigstens eine Heizeinrichtung und/oder Kühleinrichtung, einen Ventilator und ein Gehäuse auf, wobei das Gehäuse wenigstens einen Einlaß, und wenigstens einen Auslaß für ein gasförmiges Medium, insbesondere Luft aufweist.

Erfindungsgemäß ist die Vorrichtung zum Austausch von Wärme in der Aufnahmeeinrichtung des Fahrzeuges, insbesondere des Kraftfahrzeuges angeordnet, wobei die Aufnahmeeinrichtung im Wesentlichen durch wenigstens ein erstes Trennelement zum Motorraum, und durch wenigstens ein zweites Trennelement zum Fahrgastinnenraum räumlich begrenzt wird. Ferner wird die zu temperierende Luft wenigstens abschnittsweise in der Vorrichtung zum Austausch von Wärme parallel zu wenigstens einer Ebene geführt, welche durch wenigstens ein Trennelement aufgespannt wird.

Die Vorrichtung zum Austausch von Wärme weist gemäß einer besonders bevorzugten Ausführungsform wenigstens einen Lüftungseinlaß für Frischluft, insbesondere Außenluft auf, und/oder wenigstens einen Lüftungseinlaß für Luft aus dem Fahrzeuginnenraum (Umluft) auf. Gemäß einer bevorzugten Ausführungsform ist das erste Trennelement, welches wenigstens einen Teil der Begrenzungswand der Aufnahmeeinrichtung bildet, zwischen dem Motorraum und der Vorrichtung zum Austausch von Wärme in der Art angeordnet, dass es sich im wesentlichen zwischen der Innenkontur der beiden seitlichen Bereiche einer Fahrzeugkarosserie erstreckt und wenigstens einen weiteren Raum der Begrenzungswand der Aufnahmeeinrichtung bildet. Weitere Trennwände können vorgesehen sein, wobei insbesondere die Verwendung von bereits aus anderen Bereichen des Fahrzeuges vorhandenen Wänden für die Begrenzung der Aufnahmeeinrichtung im Sinne der vorliegenden Erfindung ist.

Erfindungsgemäß wird hierdurch ein Raum geschaffen, der eine weitgehende, wenn jedoch nicht vollständige Begrenzung der Aufnahmeeinrichtung bereitstellt, die jedoch durch zusätzliche Öffnungen, Durchbrüche oder dergleichen den Zugang bzw. die Zuführung von Versorgungsteilen ermöglicht. Ferner ist gemäß eines weiteren Ausführungsbeispieles der vorliegenden Erfindung das zweite Trennelement zwischen dem Fahrgastinnenraum und der Vorrichtung zum Austausch von Wärme angeordnet, wobei sich auch dieses Trennelement im wesentlichen zwischen der Innenkontur der seitlichen Bereiche der Fahrzeugkarosserie erstreckt.

Die Trennwände sind gemäß eines besonders bevorzugten Ausführungsbeispiels aus wenigstens einem Material hergestellt, welches aus einer Gruppe von Materialien ausgewählt ist, welche Metalle, wie beispielsweise Aluminium, Aluminiumlegierungen, Eisen, Eisenlegierungen, Zink, Nickel, Kunststoffe, Verbundwerkstoffe, natürliche Faserstoffe, künstliche Faserstoffe und dergleichen aufweist.

Das zweite Trennelement ist ferner in bezug auf die Fahrtrichtung des Kraftfahrzeuges im wesentlichen vor dem Armaturenbrett angeordnet, welches innerhalb des Fahrgastraumes für die Aufnahme von Anzeigeeinrichtungen und/oder für die Abdeckung von spezifischen Einrichtungen, wie beispielsweise Steuergeräten, Verbindungsleitungen und dergleichen vorgesehen ist. Gemäß eines besonders bevorzugten Ausführungsbeispiels wird die Vorrichtung zum Austausch von Wärme mit wenigstens einem Trennelement form-, kraft- und/oder stoffschlüssig verbunden.

Gemäß diesem Ausführungsbeispiel ist insbesondere vorgesehen, die Trennelemente so zu gestalten, dass sie eine ausreichende Stabilisierung der Vorrichtung zum Austauschen von Wärme im Kfz erreichen, wobei dies sowohl durch die Verwendung spezifischer Materialien, als auch durch eine entsprechende Konstruktion und deren Verbindung mit weiteren Komponenten des Fahrzeuginnenraums bewirkt werden kann.

Die Trennelemente weisen gemäß eines bevorzugten Ausführungsbeispieles Öffnungen auf, durch welche wenigstens die mittels der Vorrichtung temperierte Luft in den Fahrzeuginnenraum unter Verwendung von Strömungswegen eingeleitet und/oder durch welche wenigstens ein Teil der Luft aus dem Fahrzeuginnenraum der Vorrichtung zum Austauschen von Wärme zugeführt werden kann. Ferner können Öffnungen vorgesehen sein, um die Installation der Vorrichtung zum Austausch von Wärme zu bewirken. Diese Öffnungen können jedoch dann entfallen, wenn die Aufnahmeeinrichtung gemäß einer weiteren besonders bevorzugten Ausführungsform zwischen dem Motorraum und dem Fahrzeugraum so gewählt wird, dass die Zugänglichkeit zu der Vorrichtung zum Austausch von Wärme über den Motorraum erfolgen kann.

Ferner können Öffnungen vorgesehen werden, durch welche insbesondere Steuerleitungen bzw. Energieversorgungsleitungen geführt werden, um sowohl wenigstens eine Vorrichtung zum Austauschen von Wärme, als auch entsprechende Stelleinrichtungen, Steuereinrichtungen und dergleichen zu verbinden. Auch die Durchleitung von weiteren Verbindungseinrichtungen, insbesondere zwischen dem Motorraum und dem Fahrgastinnenraum liegen im Sinn der vorliegenden Erfindung.

Erfindungsgemäß sind in den Strömungswegen für die Zu- und Ableitung der Luft Stelleinrichtungen angeordnet, welche insbesondere die Strömungsgeschwindigkeit, die Luftmenge und/oder die Strömungsrichtung der Luft wenigstens teilweise beeinflussen.

Solche Stelleinrichtungen können gemäß einer besonders bevorzugten Ausführungsform Klappen, Blenden, Lamellen und dergleichen elektrisch und/oder mechanisch betriebener Art sein.

Erfindungsgemäß ist ein Teil der Strömungswege wenigstens in einer ersten Position der Stelleinrichtung für die Ableitung der temperierten Luft in den Fahrzeuginnenraum vorgesehen. In wenigstens einer zweiten Position der Stelleinrichtung ist dieser Strömungsweg für die Zuführung der Luft aus dem Fahrzeuginnenraum in die Vorrichtung zum Austausch von Wärme vorgesehen.

Ferner bilden gemäß einer weiteren besonders bevorzugten Ausführungsform wenigstens zwei Strömungswege eine Lüftungsleitung, wobei wenigstens ein Strömungsweg für die Zuführung der temperierten Luft in den Fahrzeuginnenraum dient. Wenigstens ein weiterer Strömungsweg der Luftleitung weist wenigstens eine Stelleinrichtung auf, durch welche in wenigstens einer ersten Position der Stelleinrichtung die temperierte Luft in den Fahrzeugraum geleitet wird, und durch welche in wenigstens einer zweiten Position Luft (Umluft) aus dem Fahrzeuginnenraum der Vorrichtung zum Austausch von Wärme zugeführt wird.

Gemäß einem weiteren Ausführungsbeispiel werden mehr als zwei Stelleinrichtungen verwendet, welche voneinander beabstandet sind. Gemäß einem weiteren besonders bevorzugten Ausführungsbeispiel sind die Strömungswege für die Zuführung der Luft aus dem Fahrzeuginnenraum wenigstens teilweise an den gegenüberliegenden Bereichen einer Trenneinrichtung angeordnet.

Weitere Details und Merkmale der vorliegenden Erfindung ergeben sich aus den nachfolgenden Figuren und deren Beschreibung. Es sei jedoch darauf hingewiesen, dass durch die Detailbeschreibung der Figuren der Gegenstand der Erfindung, wie er sich aus den Patentansprüchen ergibt, nicht beschränkt werden soll.

So zeigen:
- Fig. 1: eine schematische Detaildarstellung des erfindungsgemäßen Fahrzeuges mit einer Aufnahmeeinrichtung für eine Vorrichtung zum Austauschen von Wärme;
- Fig. 2: die Anordnung einer Vorrichtung zum Austauschen von Wärme in einem Kraftfahrzeug mit einer Aufnahmeeinrichtung in einer ersten Betriebsstellung;
- Fig. 3: die Anordnung gemäß Fig. 2 in einer zweiten Betriebsstellung;
- Fig. 4: eine perspektivische Anordnung der Strömungswege für eine Aufnahmeeinrichtung gemäß Fig. 2;
- Fig. 5: eine perspektivische Detaildarstellung der Strömungswege für eine Aufnahmeeinrichtung gemäß Fig. 3;
- Fig. 6: eine perspektivische Darstellung der Anordnung einer Vorrichtung zum Austauschen von Wärme in einem Kraftfahrzeug mit einer Aufnahmeeinrichtung in einer ersten Betriebsposition;
- Fig. 7: die Anordnung gemäß Fig.6 in einer zweiten Betriebsposition;
- Fig. 8: eine perspektivische Darstellung der Anordnung aus Fig. 7 in einer zweiten perspektivischen Ansicht.

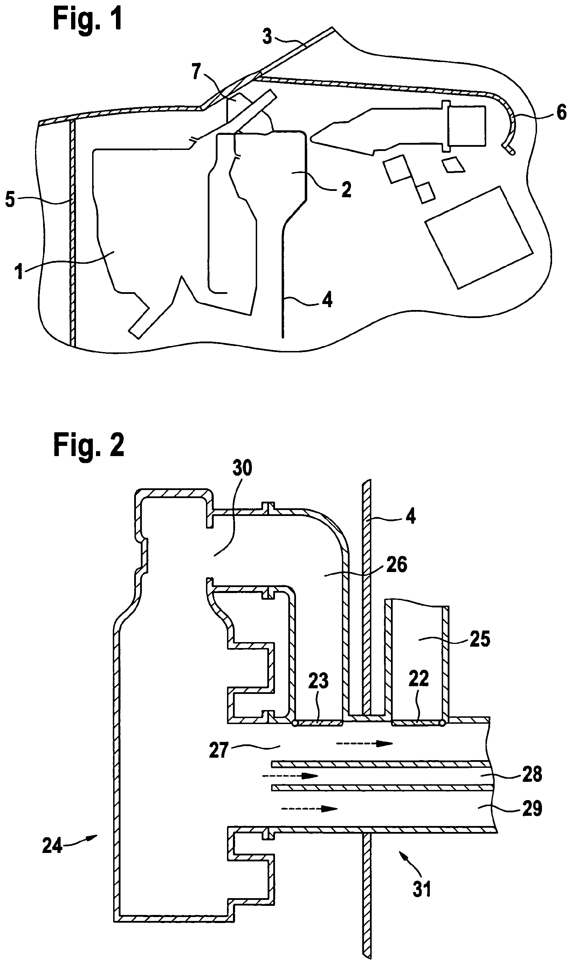

Fig. 1 zeigt die schematische Detailansicht eines Kraftfahrzeuges mit einer Aufnahmeeinrichtung, in welcher eine Vorrichtung zum Austauschen von Wärme, wie beispielsweise eine Klimaanlage, welche elektronisch oder mechanisch gesteuert wird, angeordnet ist.

Bezugszeichen 1 kennzeichnet diese Vorrichtung zum Austauschen von Wärme, wobei deren Anordnung in Fahrzeugrichtung nach vorne durch ein erstes Trennelement vom Motorraum getrennt ist und in Richtung zum Fahrzeuginnenraum durch ein zweites Trennelement 4 begrenzt wird. Die beiden Trennelemente bilden zwei Begrenzungselemente des erfindungsgemäßen Kraftfahrzeuges mit einer Aufnahmeeinrichtung.

In dieser schematischen Darstellung sind ferner die Windschutzscheibe 3 und das Armaturenbrett 6 des Fahrzeuges dargestellt, wobei mit dem Bezugszeichen 7 ein Hohlraum eines Querträgers des Fahrzeuges gekennzeichnet ist, durch welchen gemäß einer besonders bevorzugten Ausführungsform wenigstens ein Strömungsweg für die Luft geführt werden kann, um beispielsweise Luft an die Windschutzscheibeninnenseite zu leiten. Ferner kann in diesem Bereich für die Entrichtung der Vorrichtung genutzt werden, wobei insbesondere der Hohlraum des Querträgers 7 verwendet wird. Mit dem Bezugszeichen 2 ist ein weiterer Teil des Querträgers bezeichnet, an dessen hinteren Ende beispielsweise die zweite Trennwand wenigstens teilweise angeordnet ist.

Fig. 2 zeigt die schematische Anordnung einer Klimaanlage, in einem erfindungsgemäßen Kraftfahrzeug mit einer Aufnahmeeinrichtung in der Draufsicht. Das Bezugszeichen 21 kennzeichnet die Klimaanlage und einen Teil der Strömungswege, insbesondere der Zuführung der Luft in den Fahrgastinnenraum bzw. den Strömungsweg für eine sogenannte Umluftbetriebsart. In der, in Fig. 2 dargestellten, ersten Betriebsposition sind die Klappen 22 und 23 der Strömungswege 25 und 26 geschlossen, so dass die Anlage lediglich mit Frischluft (nicht dargestellt) betrieben wird. Über die Auslassöffnungen, welche in einer Lüftungsleitung mit mehreren Strömungswegen mündet, wird die temperierte Luft der Klimaanlage in den Fahrzeuginnenraum geleitet.

Hierbei weist die Lüftungsleitung gemäß dem dargestellten Ausführungsbeispiel drei Strömungswege 27, 28 und 29 auf, wobei insbesondere der Strömungsweg 27 in einem vorgegebenen Winkel, in bezug auf die Strömungswege 25 und 26 angeordnet ist und in Abhängigkeit der Klappenstellung 22, 23 in diese wenigstens teilweise mündet. In dieser ersten Betriebsart wird über die Strömungswege 28 und 29 und auch über den Strömungsweg 27 die temperierte Luft in den Fahrzeuginnenraum geleitet.

Mit dem Bezugszeichen 4 ist die zum Fahrzeuginnenraum angeordnete Trennwand gekennzeichnet. Diese weist unter anderem die Ausnehmungen (Öffnungen) für die Durchführung der Lüftungsleitung mit den Strömungswegen auf.

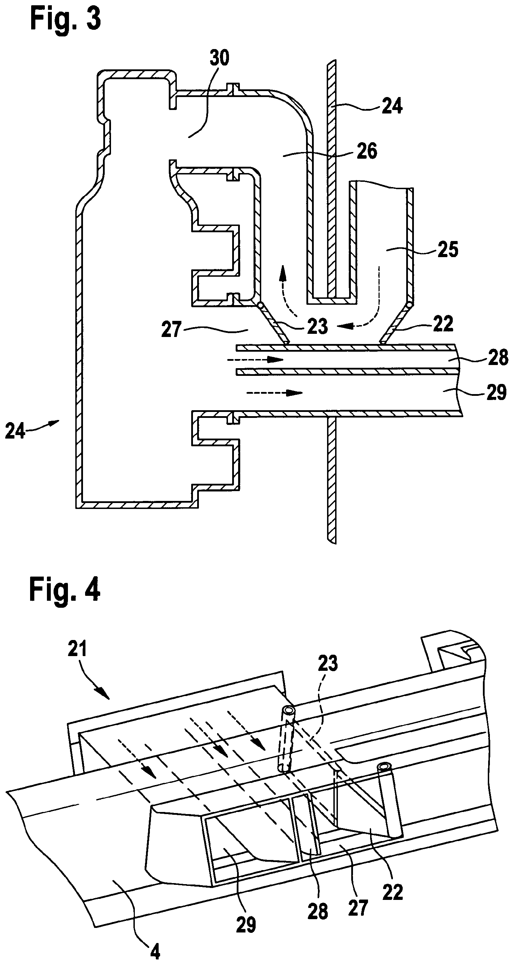

In Fig. 3 ist die Anordnung einer Klimaanlage in einem Kraftfahrzeug mit einer Aufnahmeeinrichtung gemäß Fig. 2 in einer zweiten Betriebsposition dargestellt. In dieser Betriebsposition wird der Klimaanlage wenigstens teilweise Luft aus dem Fahrzeuginnenraum über den Strömungsweg 25, 26 zugeführt, wobei der Strömungsweg durch die Position der Klappen 22 und 23 abschnittsweise entlang des Strömungswegs 27 geführt wird, und im Ansaugbereich 30 der Klimaanlage mündet. Von hier aus wird die Luft in ihren thermodynamischen Eigenschaften verändert und über die Strömungswege 28 und 29 wiederum in den Fahrzeuginnenraum zurückgeführt. Diese Betriebsweise ist unter anderem als Umluftbetriebsart im Stand der Technik bekannt.

Fig. 4 zeigt eine perspektivische Darstellung der Strömungswege für eine Vorrichtung zum Austauschen von Wärme, die in einem erfindungsgemäßen Kraftfahrzeug angeordnet ist.

Hierbei ist neben den Strömungswegen 28 und 29 auch der Strömungsweg 27 zu erkennen, wobei an der rückwärtigen Seite eine Flanschverbindung dargestellt ist, mit welcher beispielsweise eine Klimaanlage verbunden werden kann. Der Strömungsweg 27 ist für die Zuführung der Luft in den Fahrzeuginnenraum dadurch freigegeben, dass sich die Klappen 22 und 23 in einer geschlossenen Position befinden. Ferner ist dadurch der Strömungsweg 25 und 26 für die Zuleitung der Fahrzeuginnenluft in die Klimaanlage verschlossen.

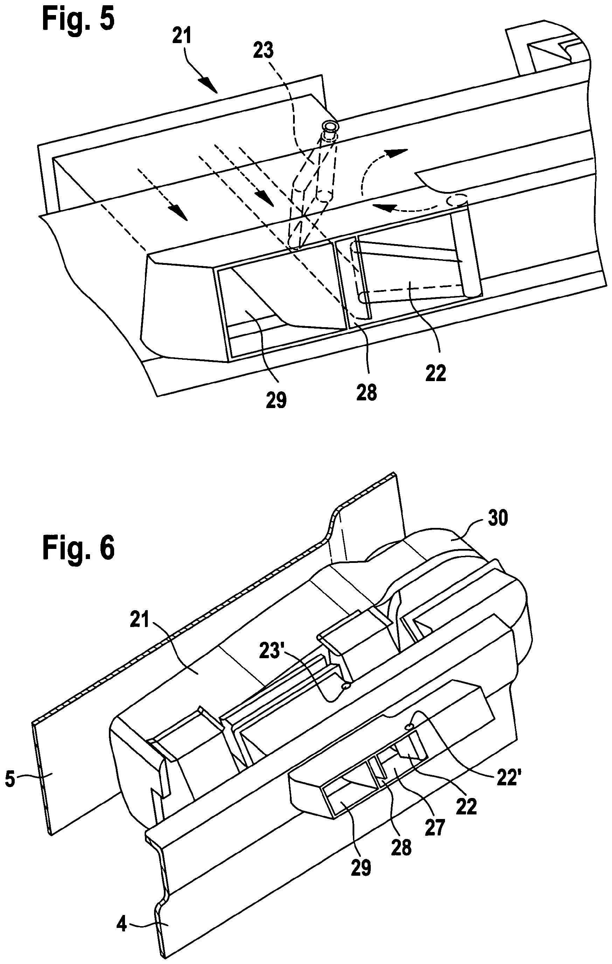

Fig. 5 zeigt die perspektivische Darstellung aus Fig. 4 in einer zweiten Betriebsposition, bei welcher die Klappen 22 und 23 geöffnet sind. Hierdurch wird der Strömungsweg 27 verschlossen und gleichzeitig der Strömungsweg 25 und 26 für die Zuführung der Fahrzeuginnenraumluft in die Klimaanlage freigegeben. Ferner sind auch die Strömungswege 28 und 29 zur Rückführung der Luft in den Fahrzeuginnenraum dargestellt.

Fig. 6 ist eine perspektivische Überblickszeichnung, bei welcher die Anordnung der Vorrichtung zum Austauschen von Wärme in dem erfindungsgemäßen Kraftfahrzeug dargestellt ist, wobei insbesondere die Trennelemente 4 und 5 zu erkennen sind.

Die Lüftungsleitung ist gemäß dem dargestellten Ausführungsbeispiel über die Flanschverbindungen mit der Klimaanlage verbunden, wobei auch die Strömungswege 27, 28, 29 und die Klappe 22 zu erkennen sind. Die Klappen sind gemäß dem hier dargestellten Ausführungsbeispiel als drehbewegliche Klappen ausgebildet, deren Anlenkungspunkt beispielsweise in Fig. 6 mit den Bezugszeichen 22' und 23' gekennzeichnet sind.

Die Verbindung zwischen den Strömungswegen und einer Vorrichtung zum Austausch von Wärme kann jedoch auch durch eine direkte und/oder indirekte Verbindung wie z.B. mit einem Zwischenstück erfolgen, wobei auch Steckverbindungen, Klebverbindungen und der Gleichen im Sinn der vorliegenden Erfindung liegen.

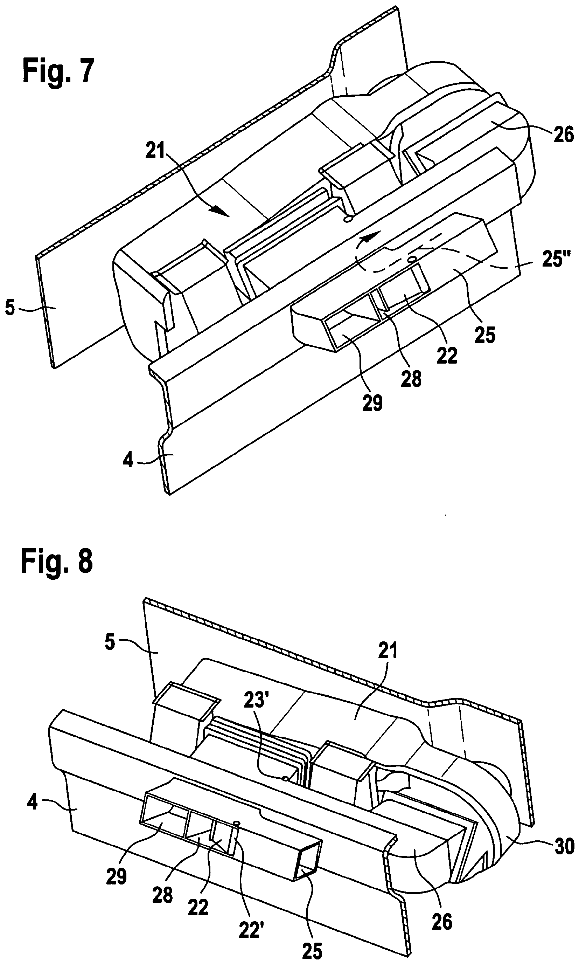

Fig. 7 zeigt die Anordnung einer Klimaanlage gemäß Fig. 6 in einem erfindungsgemäßen Fahrzeug in einer zweiten Betriebsposition, wobei insbesondere der Strömungsweg für die aus dem Innenraum des Fahrzeuges abgegebene Luft in die Klimaanlage durch den Pfeil 25" dargestellt ist. Die Klappen 22 und 23 sind geöffnet, so dass für die Rückführung der Luft lediglich die Strömungswege 28 und 29 zur Verfügung stehen.

Fig. 8 entspricht weitgehend der Darstellung aus Fig. 7, jedoch zeigt es die Anordnung aus einer anderen Perspektive. Hierbei dienen wiederum der Strömungsweg 25 und 26 für den Umluftbetrieb, wobei die Klappe 22 hier in geöffneter Position gemeint ist. Ferner sind die Strömungswege 28 und 29 zu erkennen. Die Klimaanlage selbst ist mit dem Bezugszeichen 21 gekennzeichnet, wobei diese zwischen den Trennelementen 4 und 5 aufgenommen ist.

Es sei ferner darauf hingewiesen, daß die Darstellung der Trennelemente in den Figuren beispielhaft ist, und das viele verschiedene Gestaltungsmöglichkeiten, insbesondere die Anpassung der Form der Trennelemente an speziellen Fahrzeugkonturen im Sinn der vorliegenden Erfindung ist.

## Patentansprüche

1. Fahrzeug, insbesondere Kraftfahrzeug, mit wenigstens einer Aufnahmeeinrichtung für wenigstens eine Vorrichtung (1) zum Austausch von Wärme mit wenigstens einer Heizeinrichtung und/oder Kühleinrichtung, einem Ventilator und einem Gehäuse mit wenigstens einem Lüftungseinlass und wenigstens einem Lüftungsauslass für einen zu temperierenden Luftstrom, wobei die Vorrichtung in der Aufnahmeeinrichtung angeordnet ist, welche im Wesentlichen durch wenigstens ein erstes Trennelement (5) zum Motorraum und durch ein zweites Trennelement (4) zum Fahrgastinnenraum räumlich bestimmt wird und die zu temperierende Luft wenigstens abschnittsweise parallel zu wenigstens einer Ebene geführt wird, welche durch wenigstens ein Trennelement (4, 5) der Aufnahmeeinrichtung aufgespannt wird, wobei die Vorrichtung Strömungswege (25, 26, 27) für die Zu- und Ableitung der Luft aufweist und in den Strömungswegen für die Zu- und Ableitung der Luft Stelleinrichtungen (22, 23) angeordnet sind, welche die Strömungsgeschwindigkeit, die Luftmenge und/oder Strömungsrichtung wenigstens teilweise beeinflussen, **dadurch gekennzeichnet, dass** ein Teil der Strömungswege (25, 26, 27) wenigstens in einer ersten Position der Stelleinrichtungen (22, 23) für die Ableitung der temperierten Luft in den Fahrzeuginnenraum und in wenigstens einer zweiten Position der Stelleinrichtungen (22, 23) für die Zuführung der Luft aus dem Fahrzeuginnenraum in die Vorrichtung zum Austauschen von Wärme dient.

2. Fahrzeug mit wenigstens einer Aufnahmeeinrichtung gemäß Anspruch 1, **dadurch gekennzeichnet, dass** die Vorrichtung zum Austausch von Wärme wenigstens einen Lüftungseinlass für Frischluft und wenigsten einen Lüftungseinlass für Luft aus dem Fahrzeuginnenraum, Umluft, aufweist.

3. Fahrzeug mit wenigstens einer Aufnahmeeinrichtung gemäß wenigstens einem der vorstehenden Ansprüche, **dadurch gekennzeichnet, dass** das erste Trennelement (5) zwischen dem Motorraum und der Vorrichtung zum Austausch von Wärme sich im Wesentlichen zwischen der Innenkontur der seitlichen Fahrzeugkaroserie erstreckt.

4. Fahrzeug mit wenigstens einer Aufnahmeeinrichtung gemäß wenigstens einem der vorstehenden Ansprüche, **dadurch gekennzeichnet, dass** die Trennwände (4, 5) wenigstens ein Material aufweisen, welches aus einer Gruppe von Materialien ausgewählt ist, welche Metalle wie Aluminium, Aluminiumlegierungen, Eisen, Eisenlegierungen, Zink, Kunststoff, Verbundwerkstoffe, natürliche Faserstoffe und dergleichen aufweist.

5. Fahrzeug mit wenigstens einer Aufnahmeeinrichtung gemäß wenigstens einem der vorstehenden Ansprüche, **dadurch gekennzeichnet, dass** das zweite Trennelement (4) zwischen dem Fahrgastinnenraum und der Vorrichtung zum Austausch von Wärme sich im Wesentlichen zwischen der Innenkontur der seitlichen Fahrzeugkaroserie erstreckt.

6. Fahrzeug mit wenigstens einer Aufnahmeeinrichtung gemäß wenigstens einem der vorstehenden Ansprüche, **dadurch gekennzeichnet, dass** das zweite Trennelement (4) in Bezug auf die Fahrtrichtung des Kraftfahrzeuges im Wesentlichen vor dem Armaturenbrett (6) angeordnet ist.

7. Fahrzeug mit wenigstens einer Aufnahmeeinrichtung gemäß wenigstens einem der vorstehenden Ansprüche, **dadurch gekennzeichnet, dass** die Vorrichtung (1) an wenigstens einem Trennelement (4, 5) form-, kraft- und/oder stoffschlüssig verbunden ist.

8. Fahrzeug mit wenigstens einer Aufnahmeeinrichtung gemäß wenigstens einem der vorstehenden Ansprüche, **dadurch gekennzeichnet, dass** wenigstens das zweite Trennelement (4) Öffnungen aufweist, durch welche wenigstens die temperierte Luft in den Fahrzeuginnenraum und/oder durch welche wenigstes ein Teil der Luft aus dem Fahrzeuginnenraum der Vorrichtung zum Austauschen von Wärme zugeführt wird.

9. Fahrzeug mit wenigstens einer Aufnahmeeinrichtung gemäß wenigstens einem der vorstehenden Ansprüche, **dadurch gekennzeichnet, dass** wenigstens zwei Strömungswege (27, 28, 29) eine Lüftungsleitung bilden, wobei wenigstens ein Strömungsweg (28, 29) für die Zuführung der temperierten Luft in den Fahrzeuginnenraum dient und wenigstens ein weiterer Strömungsweg (27) Stelleinrichtungen (22, 23) aufweist, durch weiche in wenigstens einer ersten Position der Stelleinrichtungen (22, 23) temperierte Luft in den Fahrzeuginnenraum geleitet wird und in wenigstens einer zweiten Position der Stelleinrichtungen (22, 23) Luft aus dem Fahrzeuginnenraum der Vorrichtung zum Austausch von Wärme zugeführt wird.

10. Fahrzeug mit wenigstens einer Aufnahmeeinrichtung gemäß Anspruch 9, **dadurch gekennzeichnet, dass** als Stellei nrichtungen (22, 23) wenigstens zwei beabstandete Lüftungsklappen verwendet werden.

11. Fahrzeug mit wenigstens einer Aufnahmeeinrichtung gemäß wenigstens einem der vorstehenden Ansprüche, **dadurch gekennzeichnet, dass** die Strömungswege für die Zuführung der Luft aus dem Fahrzeuginnenraum wenigstens teilweise an im Wesentlichen gegenüberliegenden Bereichen der zweiten Trenneinrichtung (4) angeordnet sind.

12. Fahrzeug nach einem der vorhergehenden Ansprüche mit einer elektrisch und/oder mechanisch gesteuerten Klimaanlage, welche wenigstens eine Heizeinrichtung und/oder Kühleinrichtung, einen Ventilator, ein Gehäuse und eine vorgegebene Anzahl an Strömungswegen aufweist.

## Claims

1. A vehicle, in particular a motor vehicle, with at least one receiving means for at least one device (1) for exchanging heat with at least one heating device and/or cooling device, a fan and a housing with at least one ventilation inlet and at least one ventilation outlet for an air flow to be conditioned, wherein the device is arranged in the receiving means which is substantially spatially determined by at least one first separating element (5) to the engine compartment and by a second separating element (4) to the passenger compartment, and the air to be conditioned is guided, at least in sections, in parallel to at least one plane which is spanned by at least one separating element (4, 5) of the receiving means, wherein the device has flow paths (25, 26, 27) for the introduction and discharge of the air and control means (22, 23) which influence the flow rate, the amount of air and/or the flow direction at least in part are arranged in the flow paths for the introduction and discharge of the air, **characterised in that** a part of the flow paths (25, 26, 27) serves to discharge the conditioned air into the vehicle interior in at least a first position of the control means (22, 23) and to introduce the air from the vehicle interior into the device for exchanging heat in at least a second position of the control means (22, 23).

2. The vehicle with at least one receiving means according to claim 1, **characterised in that** the device for exchanging heat has at least one ventilation inlet for fresh air and at least one ventilation inlet for air from the vehicle interior, i.e. ambient air.

3. The vehicle with at least one receiving means according to at least one of the preceding claims, **characterised in that** the first separating element (5) between the engine compartment and the device for exchanging heat substantially extends between the inner contour of the lateral vehicle body.

4. The vehicle with at least one receiving means according to at least one of the preceding claims, **characterised in that** the separating walls (4, 5) have at least one material which is selected from a group of materials which has metals such as aluminium, aluminium alloys, iron, iron alloys, zinc, plastic, composite materials, natural fibrous materials and the like.

5. The vehicle with at least one receiving means according to at least one of the preceding claims, **characterised in that** the second separating element (4) between the passenger compartment and the device for exchanging heat substantially extends between the inner contour of the lateral vehicle body.

6. The vehicle with at least one receiving means according to at least one of the preceding claims, **characterised in that** the second separating element (4) is arranged substantially in front of the dashboard (6) relative to the driving direction of the motor vehicle.

7. The vehicle with at least one receiving means according to at least one of the preceding claims, **characterised in that** the device (1) is connected to at least one separating element (4, 5) in a positive, non-positive or integral manner.

8. The vehicle with at least one receiving means according to at least one of the preceding claims, **characterised in that** at least the second separating element (4) has openings through which at least the conditioned air is introduced into the vehicle interior and/or through which at least a part of the air from the vehicle interior is introduced into the device for exchanging heat.

9. The vehicle with at least one receiving means according to at least one of the preceding claims, **characterised in that** at least two flow paths (27, 28, 29) form a ventilation line, wherein at least one flow path (28, 29) serves to introduce the conditioned air into the vehicle interior and at least one further flow path (27) has control means (22, 23) through which conditioned air is introduced into the vehicle interior in at least a first position of the control means (22, 23) and air from the vehicle interior is introduced into the device for exchanging heat in at least a second position of the control means (22, 23).

10. The vehicle with at least one receiving means according to claim 9, **characterised in that** at least two spaced apart ventilation flaps are used as control means (22, 23).

11. The vehicle with at least one receiving means according to at least one of the preceding claims, **characterised in that** the flow paths for the introduction of the air from the vehicle interior are arranged at least in part in regions of the second separating means (4) which are substantially opposite each other.

12. The vehicle according to one of the preceding claims with an electrically and/or mechanically controlled air-conditioning system which has at least one heating device and/or cooling device, a fan, a housing and a predetermined number of flow paths.

## Revendications

1. Véhicule, en particulier véhicule automobile, comprenant au moins un dispositif de logement pour au moins un dispositif (1) servant à l'échange de chaleur avec au moins un dispositif de chauffage et / ou un dispositif de refroidissement, ledit véhicule comprenant un ventilateur et un carter comportant au moins une entrée de ventilation et au moins une sortie de ventilation pour un flux d'air à tempérer, où le dispositif est disposé dans le dispositif de logement qui est déterminé, dans l'espace, essentiellement par au moins un premier élément de séparation (5) par rapport au compartiment pour le moteur et par un second élément de séparation (4) par rapport à l'espace intérieur de l'habitacle, et l'air à tempérer est guidé au moins en partie parallèlement à au moins un plan qui est défini par au moins un élément de séparation (4, 5) du dispositif de logement, où le dispositif présente des voies d'écoulement (25, 26, 27) pour l'arrivée et l'évacuation de l'air, et des dispositifs de réglage (22, 23) sont disposés, dans les voies d'écoulement, pour l'arrivée et l'évacuation de l'air, lesquels dispositifs de réglage influencent au moins en partie la vitesse de l'écoulement, le débit d'air et / ou la direction de l'écoulement, **caractérisé en ce qu'**une partie des voies d'écoulement (25, 26, 27) sert à échanger de la chaleur au moins dans une première position des dispositifs de réglage (22, 23) prévus pour l'évacuation de l'air tempéré dans l'espace intérieur de l'habitacle et au moins dans une deuxième position des dispositifs de réglage (22, 23) prévus pour l'arrivée de l'air provenant de l'espace intérieur de l'habitacle et passant dans le dispositif.

2. Véhicule comprenant au moins un dispositif de logement selon la revendication 1, **caractérisé en ce que** le dispositif servant à l'échange de chaleur présente au moins une entrée de ventilation pour de l'air frais et au moins une entrée de ventilation pour de l'air, à savoir de l'air de circulation, provenant de l'espace intérieur de l'habitacle.

3. Véhicule comprenant au moins un dispositif de logement selon au moins l'une des revendications précédentes, **caractérisé en ce que** le premier élément de séparation (5) placé entre le compartiment pour le moteur et le dispositif servant à l'échange de chaleur s'étend essentiellement entre le contour intérieur de la carrosserie latérale du véhicule.

4. Véhicule comprenant au moins un dispositif de logement selon au moins l'une quelconque des revendications précédentes, **caractérisé en ce que** les parois de séparation (4, 5) présentent au moins un matériau qui est choisi parmi un groupe de matériaux, groupe qui présente des métaux tels que de l'aluminium, des alliages d'aluminium, du fer, des alliages de fer, du zinc, ledit groupe présentant de la matière plastique, des matériaux composites, des matières fibreuses naturelles et autres matières analogues.

5. Véhicule comprenant au moins un dispositif de logement selon au moins l'une quelconque des revendications précédentes, **caractérisé en ce que** le second élément de séparation (4) placé entre l'espace intérieur de l'habitacle et le dispositif servant à l'échange de chaleur s'étend essentiellement entre le contour intérieur de la carrosserie latérale du véhicule.

6. Véhicule comprenant au moins un dispositif de logement selon au moins l'une quelconque des revendications précédentes, **caractérisé en ce que** le second élément de séparation (4) est disposé, par rapport au sens de déplacement du véhicule automobile, pratiquement devant le tableau de bord (6).

7. Véhicule comprenant au moins un dispositif de logement selon au moins l'une quelconque des revendications précédentes, **caractérisé en ce que** le dispositif (1) est assemblé sur au moins un élément de séparation (4, 5), ledit assemblage étant réalisé par complémentarité de forme, par action de force et / ou par continuité de matière.

8. Véhicule comprenant au moins un dispositif de logement selon au moins l'une quelconque des revendications précédentes, **caractérisé en ce qu'**au moins le second élément de séparation (4) présente des ouvertures par lesquelles au moins l'air tempéré est fourni à l'espace intérieur de l'habitacle et / ou par lesquelles au moins une partie de l'air provenant de l'espace intérieur de l'habitacle est fournie au dispositif servant à l'échange de chaleur.

9. Véhicule comprenant au moins un dispositif de logement selon au moins l'une quelconque des revendications précédentes, **caractérisé en ce qu'**au moins deux voies d'écoulement (27, 28, 29) forment une conduite de ventilation, où au moins une voie d'écoulement (28, 29) sert à fournir de l'air tempéré à l'espace intérieur de l'habitacle et au moins une autre voie d'écoulement (27) présente des dispositifs de réglage (22, 23) par lesquels, dans au moins une première position des dispositifs de réglage (22, 23), de l'air tempéré est dirigé dans l'espace intérieur de l'habitacle et, dans au moins une deuxième position des dispositifs de réglage (22, 23), de l'air provenant de l'espace intérieur de l'habitacle est fourni au dispositif servant à l'échange de chaleur.

10. Véhicule comprenant au moins un dispositif de logement selon la revendication 9, **caractérisé en ce qu'**au moins deux volets de ventilation espacés sont utilisés comme dispositifs de réglage (22, 23).

11. Véhicule comprenant au moins un dispositif de logement selon au moins l'une quelconque des revendications précédentes, **caractérisé en ce que** les voies d'écoulement prévues pour l'acheminement de l'air provenant de l'espace intérieur de l'habitacle sont disposées au moins en partie sur des zones - pratiquement opposées - du second élément de séparation (4).

12. Véhicule selon l'une quelconque des revendications précédentes, comprenant un système de climatisation commandé électriquement et / ou mécaniquement, lequel système de climatisation présente au moins un dispositif de chauffage et / ou un dispositif de refroidissement, un ventilateur, un carter et un nombre donné de voies d'écoulement.
